# EUROPEAN PATENT APPLICATION

(11) **EP 2 562 629 A2**
(43) Date of publication of application: **27.02.2013**
(21) Application number: 12005668.4
(22) Date of filing: 03.08.2012
(51) Int. Cl.: G06F 3/0488, G06F 3/0482

(54) **System and method for selecting objects on a touch-sensitive dIsplay of a mobile communications device**

(30) Priority: 24.08.2011 US 201113216471
(71) Applicant: Sony Mobile Communications AB, 221 88 Lund (SE)
(72) Inventor: Bergsbjörk, Hanna, 245 62 Hjärup (SE)
(74) Representative: Banzer, Hans-Jörg

(57) **Abstract**

A mobile communications device (10) has a touch-sensitive display screen (20) and a processor (12). The touch-sensitive display (20) screen displays a collection of items arranged as a list or grid to a user of the mobile device. The processor (12) is programmed to allow the user to select and unselect one or more items in the displayed collection using only the touch-sensitive display (20). More particularly, the processor (12) is programmed to allow the user to select and unselect a plurality of items without requiring the user to select or unselect each item individually.

## Description

### FIELD OF THE INVENTION

The present invention relates generally to wireless communication devices, and more particularly to hand-held, mobile communication devices having a touch-sensitive display screen.

### BACKGROUND

Many computing devices, such as personal computers, have an external user input device (e.g., a keyboard and/or a mouse) that allows a user to selectively manage one or more items in a displayed list. However, conventional computing devices generally require the use of both hands and/or additional user input devices to manage the list selection. For example, to select one or more list items, computing devices require a user to employ one hand to press and hold a pre-programmed set of "hotkeys" on a keyboard, while simultaneously employing the other hand to navigate a mouse pointer over a list item of interest and "click" on the object. These selection functions are useful, but only on larger devices having separate user input controls (e.g., a keyboard and/or a mouse). These functions are not possible on hand-held communication devices that do not have external user input devices and/or are not capable of connecting to separate user input devices.

Because mobile communication devices do not interface with external user input devices, mobile devices will often have a touch-sensitive display screen. Touch-sensitive display screens are very popular for multiple reasons. For example, touch-sensitive displays allow a user to interact directly with whatever is displayed on the screen. Further, since users can employ the fingers of only one hand to interact with the display, there is no need for additional user input devices. However, easily and efficiently managing a list on a mobile communication device remains problematic, even with a touch-sensitive display.

For example, the Inbox of an email application executing on the mobile device typically displays received emails in a list. To select or "mark" a one or more of the emails in the list for simultaneous handling (e.g., forwarding or deleting or moving from the Inbox to another email folder), a user must select or "mark" each individual item by tapping that item with a finger or stylus. Such conventional selection or "marking" methods are slow and cumbersome, especially where the user would like to mark several items in a row.

### SUMMARY

The present invention provides a mobile communication device as defined in claim 1 and a method as defined in claim 9. The dependent claims define preferred embodiments of the present invention. The present invention provides a device and method for selecting items from a collection of items, such as list or a grid, on a touch-sensitive display of a mobile communications device. The invention is particularly useful for small hand-held mobile communication devices, such as cellular telephones, for example, that are not equipped with or capable of interfacing with, one or more external user input components such as a keyboard and a mouse.

In one embodiment, the present invention provides a mobile communications device comprising a memory configured to store application logic, a touch-sensitive display screen configured to display a collection of items to a user, and a processor operatively connected to the memory and the touch-sensitive display screen. The processor is configured to select a first item in the collection responsive to detecting a "single-tap" of the first item on the touch-sensitive display screen by the user, and expand the selection by selecting a second item in the collection and any intervening items responsive to detecting a subsequent "double-tap" of the second item on the touch-sensitive display screen by the user. As defined herein, a "single-tap" is defined as a single contact of an object associated with the user, such as the user's finger or a stylus, against the exterior surface of the touch-sensitive display 20. A "double-tap" is defined as two single-taps performed by the user in rapid succession.

In one embodiment, the processor is further configured to unselect one of the selected items responsive to detecting a subsequent single-tap of the selected item, and unselect all selected items responsive to detecting a subsequent double-tap of any of the selected items.

In one embodiment, the processor is further configured to expand the selection by selecting a third item in the collection and any intervening items responsive to detecting a subsequent double-tap of the third item on the touch-sensitive display screen by the user.

In one embodiment, the processor is further configured to determine a contact location on a surface of the touch-sensitive display for the double-tap relative to an area displaying the selected items, and expand the selection, or clear the selection, based on the determined contact location.

In one embodiment, the processor is further configured to determine whether the detected double-tap occurred within an area of the touch-sensitive display displaying the selected items, or outside of the area displaying the selected items.

In one embodiment, the processor is further configured to visually indicate the selected items to the user.

In one embodiment, the processor is further configured to determine whether a user contact on the touch-sensitive display is a single-tap or a double-tap. If no items are selected and the user contact is a double-tap, the processor is configured to select the first item in the collection of items.

In one embodiment, the collection of items comprises a plurality of items arranged in a list.

In one embodiment, the collection of items comprises a plurality of items arranged as a grid.

The present invention also provides a corresponding method of selecting items from a collection of items displayed on a touch-sensitive display of a mobile communications device. In one embodiment, the method comprises displaying a collection of items on a touch-sensitive display screen of a mobile communications device, selecting a first item in the collection responsive to detecting a single-tap of the first item on the touch-sensitive display screen by a user, and expanding the selection by selecting a second item in the collection and any intervening items responsive to detecting a subsequent double-tap of the second item on the touch-sensitive display screen by the user.

In one embodiment, the method further comprises unselecting one of the selected items responsive to detecting a subsequent single-tap of the selected item, and unselecting all selected items responsive to detecting a subsequent double-tap of any of the selected items.

In one embodiment, the method further comprises expanding the selection by selecting a third item in the collection of items and any intervening items between the third item and one of the previously selected items responsive to detecting a subsequent double-tap of the third item on the touch-sensitive display screen by the user.

In one embodiment, the method further comprises determining a contact location on a surface of the touch-sensitive display for the double-tap relative to an area displaying the selected items, and expanding the selection, or clearing the selection, based on the determined contact location.

In one embodiment, determining a contact location for the double-tap relative to an area displaying the selected items comprises determining whether the double-tap occurred within an area of the touch-sensitive display displaying the selected items, or outside of the area displaying the selected items.

In one embodiment, the method further comprises visually indicating each selected item to the user.

In one embodiment, the method further comprises determining whether a user contact on the touch-sensitive display is a single-tap or a double-tap. If the user contact is a double-tap and no items are selected, the method further comprises selecting the first item in the collection of items.

In one embodiment, the collection of items comprises a plurality of items arranged in a list.

In one embodiment, the collection of items comprises a plurality of items arranged as a grid.

Of course, those skilled in the art will appreciate that the present invention is not limited to the above contexts or examples, and will recognize additional features and advantages upon reading the following detailed description and upon viewing the accompanying drawings.

### BRIEF DESCRIPTION OF THE DRAWINGS

Figure 1A is a block diagram illustrating some of the component of a mobile communication device configured according to one embodiment of the present invention.

Figure 1B is a perspective view of a mobile communication device configured according to one embodiment of the present invention.

Figures 2A-2C and 3-4 are perspective views illustrating screenshots of a list on a mobile communications device configured according to one embodiment of the present invention.

Figure 5 is a flow diagram illustrating a method of performing one embodiment of the present invention.

### DETAILED DESCRIPTION

The present invention provides a system and method for allowing a user to select and unselect one or more items in a collection of items organized as a list or a grid, for example, and displayed on a touch-sensitive display screen of a mobile communications device. With the present invention, the user can select all the items in the list or grid at once, or a desired subset of the items, using only a single hand and a reduced number of user actions. The invention is particularly useful for small, portable devices having touch-sensitive display screens that cannot be connected to external user input devices (e.g., a keyboard and a mouse).

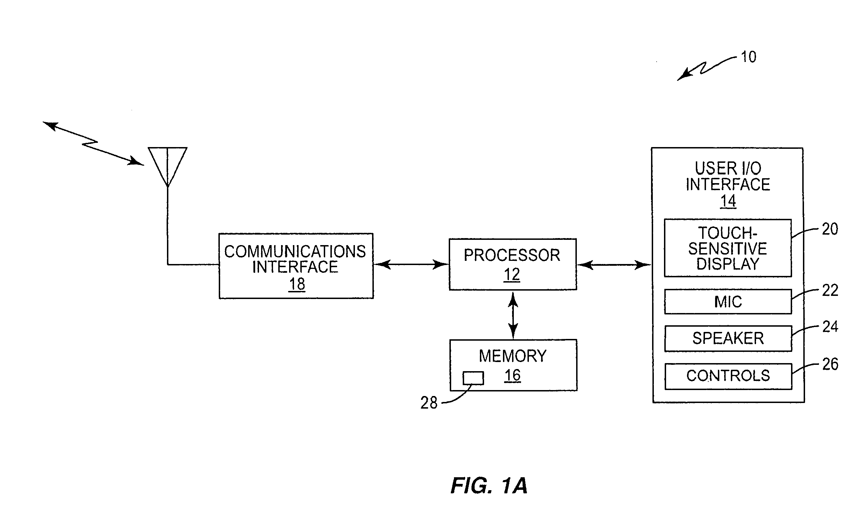

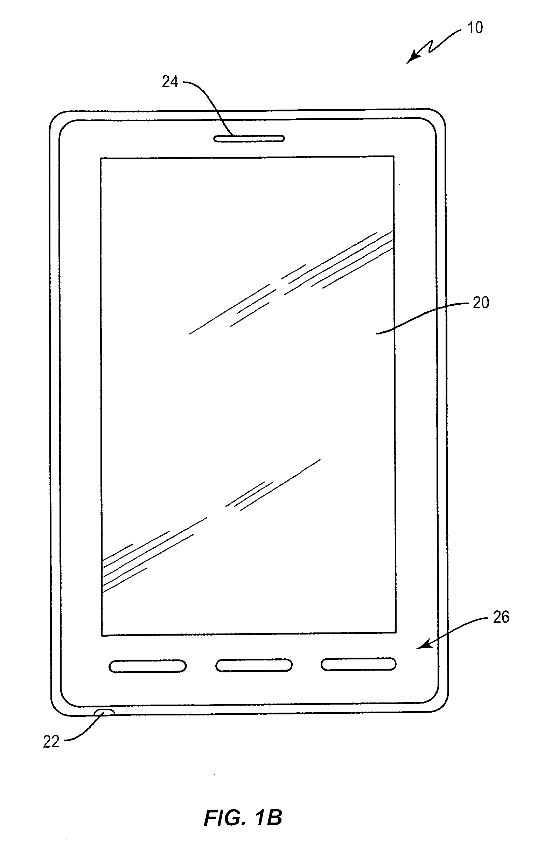

Figures 1A and 1B illustrate some of the components of a mobile communication device configured to operate according to one embodiment of the present invention. As seen in the figures and described in the specification, the device comprises a cellular telephone, and more particularly, a "Smartphone." However, this is for illustrative purposes only. Those skilled in the art will appreciate that the present invention is also suitable for use in other devices having a touch-sensitive display screen. Such devices include, but are not limited to, Personal Digital Assistants (PDAs) and tablet computing devices (e.g., the iPAD, NOOK, KINDLE, etc.).

As seen in Figures 1A-1B, a mobile communications device 10 configured according to one embodiment of the present invention comprises a programmable processor 12, a user Input/Output (I/O) interface 14, a memory 16, and a communications interface 18. Processor 12 may be, for example, one or more general purpose or special purpose microprocessors that control the operation and functions of device 10 in accordance with program instructions and data stored in memory 16. In one embodiment of the present invention, processor 12 is configured to execute an application 28 to allow a user of device 10 to select a plurality of items displayed in a list without requiring the user to select each item separately.

The user I/O interface 14 allows the user to interact with the device 10 and comprises is a touch-sensitive display 20, a microphone 22, a loudspeaker 24, and one or more global controls 26. The touch-sensitive display 20 is an electronic visual display that can also detect the presence and location of a user's touch within the display area. As is known in the art, the user may employ a finger or stylus, for example, to touch the display to view information such as dialed digits, images, call status, menu options, email, and other information.

There are several types of touch-sensitive displays that use different technologies for detecting and identifying the location of a user's touch. These include, but are not limited to, resistive touch-sensitive displays, capacitive touch-sensitive displays, and surface acoustic wave touch-sensitive displays. The technology used by these displays is well-known in the art, and therefore, only a brief review of these displays is provided here for clarity. However, it should be cleat that each type of touch-sensitive display screen is suitable for use with the present invention.

Resistive touch-sensitive displays are typically composed of multiple, electrically conductive layers separated by a narrow gap. When a user presses down on a point at the outer surface of the touch-sensitive display, the pressure causes the electrically conductive layers to contact each other at that point. The contact causes a change in the electrical current flowing through the layers, which the processor interprets as a touch event. From this touch event, the processor 12 determines the location of the user touch on the surface of the touch-sensitive display 20.

Capacitive touch-sensitive displays also have multiple layers. However, one of the layers is an insulator (e.g., glass) while the other is a thin, transparent film that conducts electricity (e.g., indium tin oxide). Typically, the exterior surface of the glass insulator is coated with the electrically conductive film. Because the human body also conducts electricity, touching the display distorts an electrostatic field generated by the conductive film. This distortion is measurable as a change in capacitance. The location of the touch is determined based on this change and sent to the processor for processing.

A surface acoustic wave touch-sensitive display utilizes ultrasonic waves to determine the presence and location of a user's touch. The ultrasonic waves pass over the surface of the touch-sensitive display. Touching the surface of the display with a finger or stylus, for example, distorts the waves in a measurable manner. From these measurements, the processor can use well-known techniques to determine the presence and location of the user's touch.

Memory 16 is a computer readable medium representing the entire hierarchy of memory in device 10, and may include both random access memory (RAM) and read-only memory (ROM). Memory 16 stores the program instructions and data required for controlling the operation and functionality of device 10, as well as the plurality of application programs, such as email, for example, that may be executed on device 10 by processor 12. As stated above, one such program stored in the memory 16 is application 28. Application 28, when executed by the processor 12 on device 10, allows the user to select and unselect a plurality of items on a list or grid, for example, displayed on the touch-sensitive display 20. More particularly, application 28 allows the user to select the plurality of items using only a single hand and a reduced number of actions, and without requiring the user to select each item individually.

The communications interface 18 may be any communication interface known in the art, but generally allows the user of device 10 to send and receive messages and data to and from a remote device over an established communications link. In one embodiment, the communication interface 18 is a fully functional cellular radio transceiver for transmitting signals to and receiving signals from a base station or other access node in a wireless communications network. In another embodiment, communications interface 18 comprises a short-range communications interface that permits the user to communicate data and information over relatively short distances - usually tens of meters. Those skilled in the art will appreciate that the communications interface 18 may implement any one of a variety of communication standards including, but not limited to, the standards known as the Global System for Mobile Communications (GSM), General Packet Radio Service (GPRS), Universal Mobile Telecommunication System (UMTS), TIA/EIA-136, cdmaOne (IS-95B), cdma2000, 3GPP Long Term Evolution (LTE), and Wideband CDMA (W-CDMA), and BLUETOOTH.

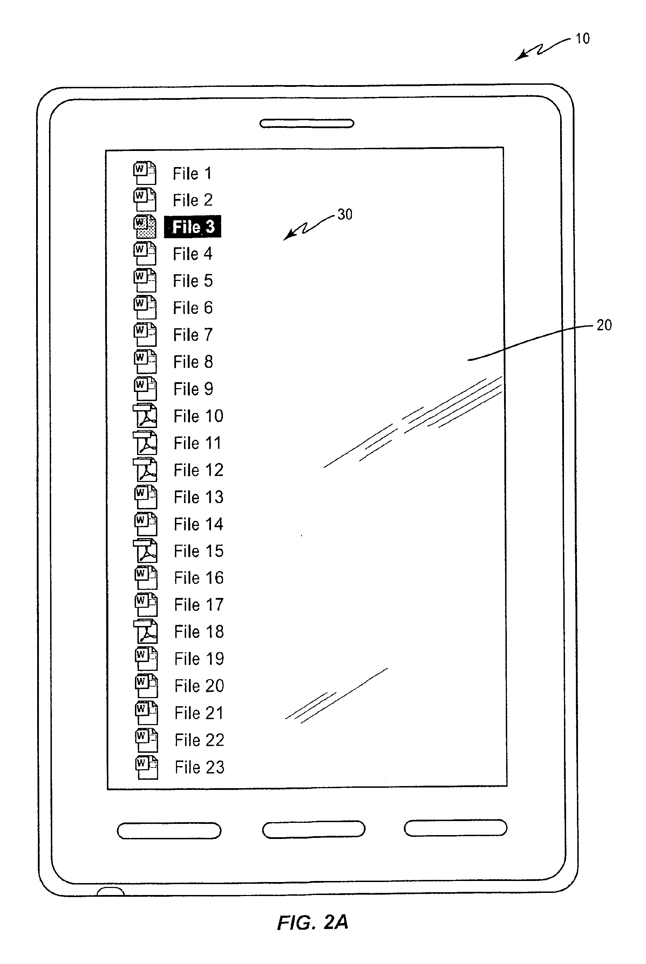

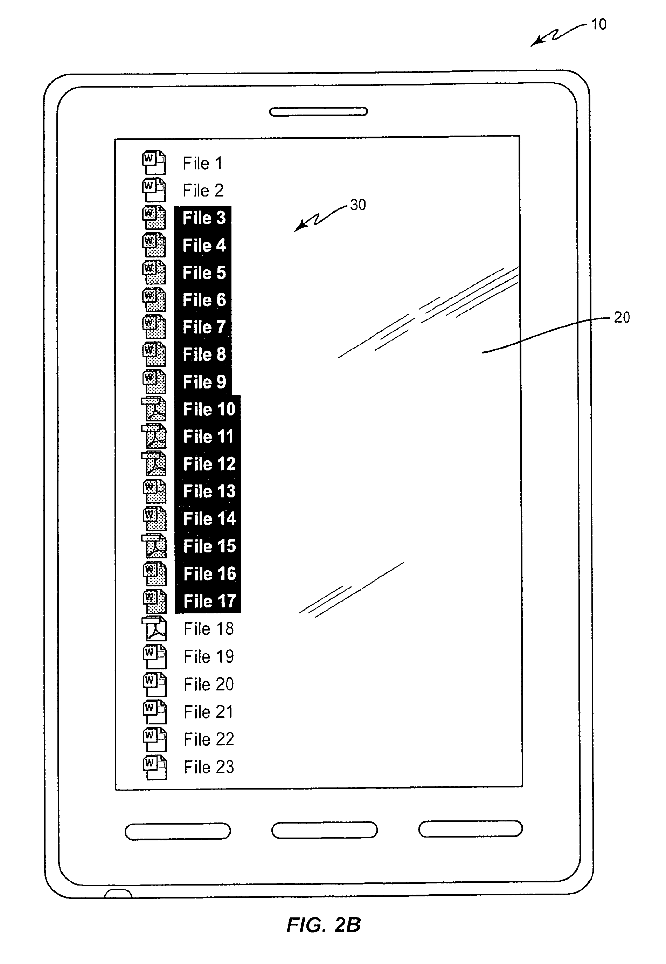

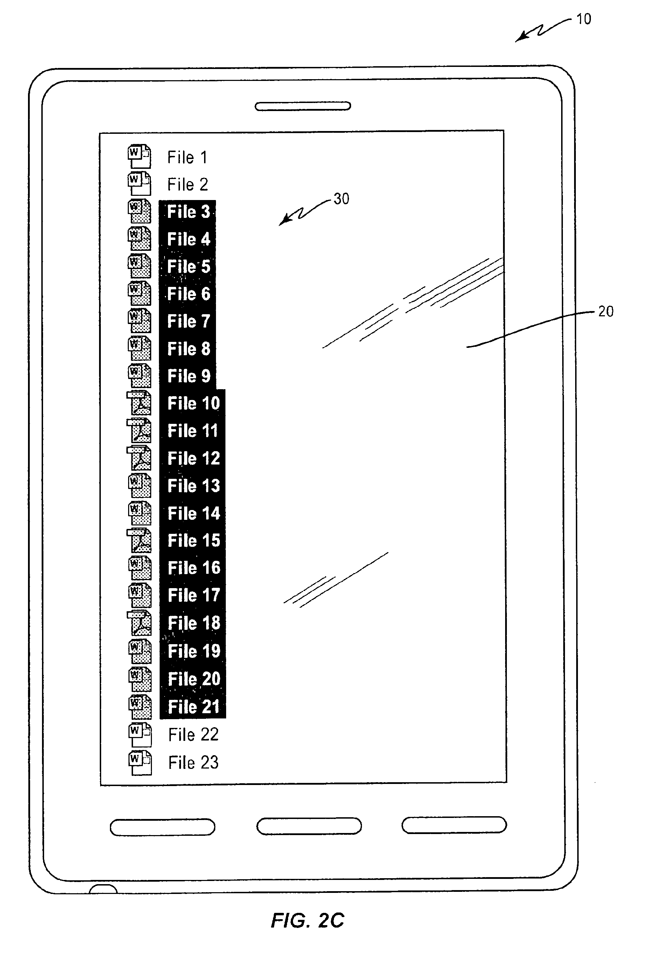

Figures 2-4 illustrate screen shots of a list 30 displayed on a touch-sensitive display 20. In this embodiment, the list 30 is a list of files identified as "File 1" to "File 23" in contiguous order. Those of ordinary skill in the art should know, however, that the discussion of the present embodiments in the context of a list of files is for illustrative purposes only. The list 30 of files is merely representative of any list or grid or other collection of items that can be selectively managed by the user, such as a list of recently received emails or a plurality of images or files arranged as a grid, for example.

The present invention detects single-tap/double-tap user actions on touch-sensitive display 20, and uses the detected action as a trigger to select (i.e., mark) and unselect (i.e., unmark) files on the list 30. As previously defined, a "single-tap" is defined as a single contact of an object associated with the user, such as the user's finger or a stylus, against the exterior surface of the touch-sensitive display 20. A "double-tap" is defined as two single-taps performed by the user in rapid succession.

Figure 2A illustrates the results of a single-tap performed by the user. Specifically, when the user taps once on the touch-sensitive display 20 at a location over the label "File 3," the processor 12 detects the single-tap and highlights the label to visually indicate to the user that the file has been selected or marked. The remaining files (i.e., Files 1-2 and 4-23) remain unselected or unmarked.

If the user desires to select multiple files, the user needs only to double-tap another file on list 30. As seen in Figure 2B, the user double-tapped the file labeled "File 17." In response to detecting the double-tap, the processor 12 expands the selection by selecting the file labeled "File 17," as well as all intervening files that are displayed between "File 3" and "File 17." To visually indicate the expanded selection to the user, the processor 12 highlights each selected file. So marked, the user may then perform some action that would affect all selected files, such as email the selected files to a designated party or delete the selected files by moving them to a trash bin.

Figure 2C illustrates the list 30 after the user has decided to once again extend the selection. Particularly, the user in Figure 2C double-tapped the file labeled "File 21," which is outside of area of the currently selected files (i.e., File 3 - File 17). In response to detecting this subsequent double-tap action outside of the selected file area, the processor 12 simply expands the selection to further include "File 21" and all intervening files between File 21 and those already in the selection. Thus, after this double-tap, the selection is expanded to include all the files between "File 3" and "File 21," inclusive. The processor 12 then highlights the additional Files 18-21 to visually indicate to the user that the additional files are now part of the selection.

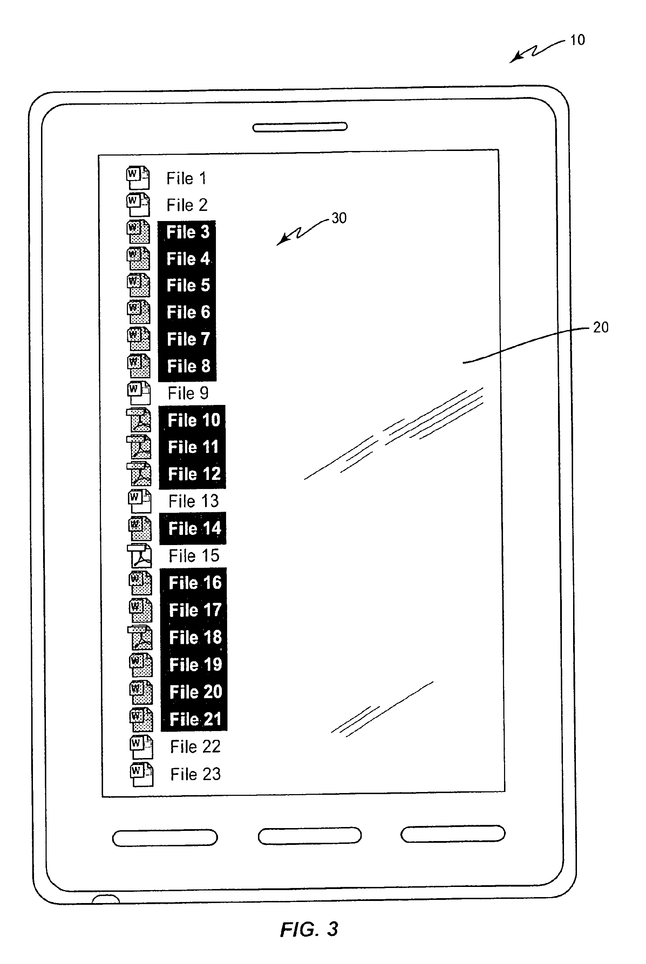

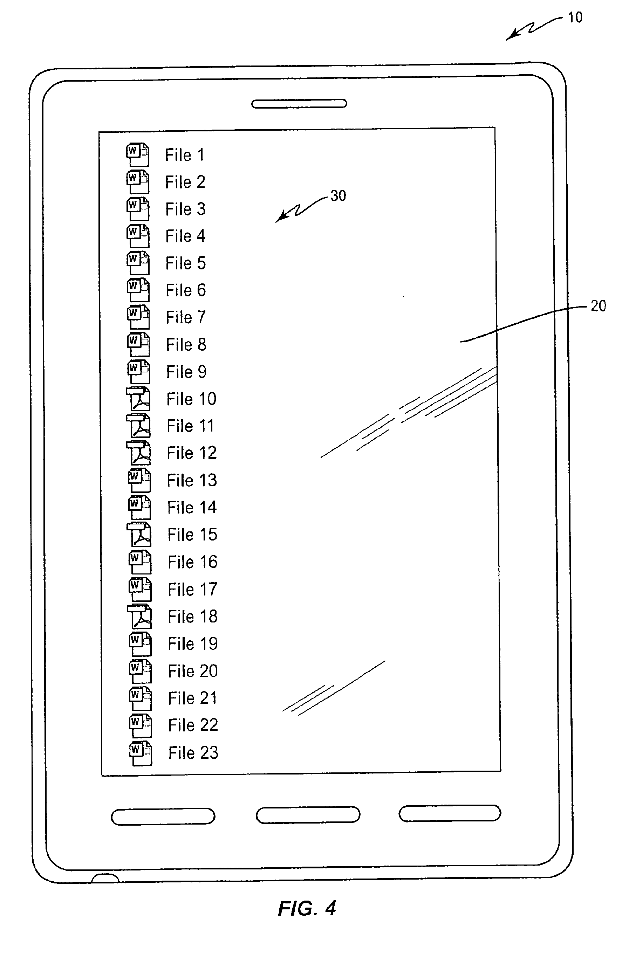

Figure 3 illustrates list 30 after the user has decided to unselect or unmark some of the files on list 30. To remove a file from the selection, the user performs a single-tap action over each individual file to be unselected. As seen in Figure 3, for example, the user performed a single-tap action on File 9, File 13, and File 15. Upon detecting the single-tap action, the processor 12 removes the highlighting from those particular unselected files while leaving the remaining files in the selection highlighted. To clear the entire selection (seen in Figure 4), the user simply double-taps the touch-sensitive display 20 within the selected file area. Upon detecting the double-tap at a location within the selected area, the processor 12 removes all highlighting from the files in list 30.

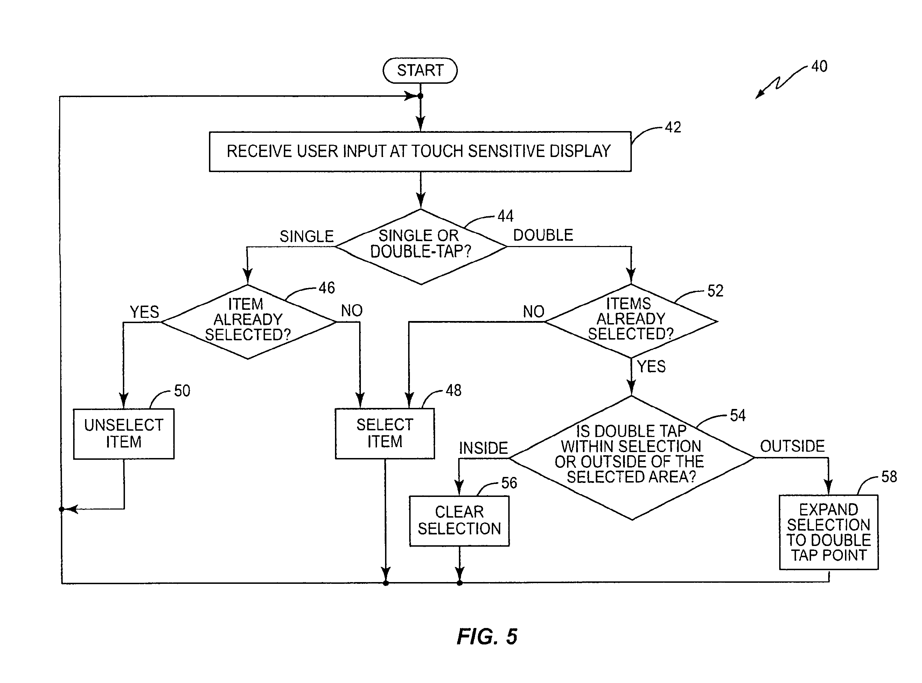

Figure 5 is a flow diagram illustrating a method 40 by which the application 28 configures the processor 12 to interpret the single-tap/double-tap user actions. Method 40 begins with the processor 12 receiving user input (42). The processor12 first determines whether the received input indicates that the user performed a single-tap or a double-tap, as well as the location of the single or double-tap on the touch-sensitive display 20 (box 44). If the user action is a single-tap, the processor 12 determines whether the location of the tap is over an item that has already been selected (box 46).

The application 28 may use any logic known in the art to determine whether a file is or is not already selected. In one embodiment, for example, the processor 12 maintains an array of multiple elements - one element for each file in the list 30. As a file is selected by a user, a value is placed in the array element that corresponds to the selected file. Array elements having no value would indicate that the corresponding file is not selected or marked.

Upon detecting a single-tap, the processor 12 checks the contents of the array elements to determine whether the corresponding file is already selected. If not, the processor 12 generates a set of selected list items by "selecting" or "marking" the file. Processor 12 then highlights the label that identifies the file to visually indicate the selection to the user. If the corresponding array element indicates that the file has been selected (box 46), the processor 12 would unselect that particular file (box 50).

For a double-tap, the processor 12 determines whether one or more items have already been selected by the user (box 52). If there are no items selected, the processor 12 simply highlights the corresponding file (box 48). If there are already files selected (box 52), the processor 12 determines whether the location of the double-tap on the touch-sensitive display 20 is inside of the selected file area (e.g., within the area of highlighting on Figure 2C), or outside of the selected file area (e.g., external to the area of highlighting on Figure 2C) (box 54). By way of example, the processor 12 may utilize the coordinates of the tap action to determine the location of the user touch on the surface of the touch-sensitive display 20. If the processor 12 determines that the user performed the double-tap within the selected area, the processor 12 clears the selection by resetting the values in the array and removing the highlighting for all selected files (box 56). If the processor 12 determines that the user performed the double-tap outside of the selected area, such as below the selected files on the file list 30, the processor 12 extends the selection as previously described (box 58).

The present invention may, of course, be carried out in other ways than those specifically set forth herein without departing from essential characteristics of the invention. For example, the previous embodiments illustrate the present invention in the context of lists of files. However, the present invention is also suitable for use with items arranged in a grid. By way of example, the items may be thumbnail images or file icons arranged in a grid pattern on the display. Therefore, the present embodiments are to be considered in all respects as illustrative and not restrictive, and all changes coming within the meaning and equivalency range of the appended claims are intended to be embraced therein.

## Claims

1. A mobile communications device (10) comprising:
a memory (16) configured to store application logic;
a touch-sensitive display (20) screen configured to display a collection of items to a user; and
a processor (12) operatively connected to the memory (16) and the touch-sensitive display (20) screen and configured to:
select (44) a first item in the collection of items responsive to detecting a single-tap of the first item on the touch-sensitive display (20) screen by the user; and
expand (44) the selection by selecting a second item in the collection of items and any intervening items responsive to detecting a subsequent double-tap of the second item on the touch-sensitive display (20) screen by the user.

2. The device (10) of claim 1 wherein the processor (12) is further configured to:
unselect (50) one of the selected items responsive to detecting a subsequent single-tap of the selected item; and
unselect (54) all selected items responsive to detecting a subsequent double-tap of any of the selected items.

3. The device (10) of claim 1 or claim 2 wherein the processor (12) is further configured to expand the selection by selecting a third item in the collection of items and any intervening items responsive to detecting a subsequent double-tap of the third item on the touch-sensitive display (20) screen by the user.

4. The device (10) of any one of claims 1-3 wherein the processor (12) is further configured to:
determine (54) a contact location on a surface of the touch-sensitive display (20) for the double-tap relative to an area displaying the selected items;
expand (58) the selection, or clear (56) the selection, based on the determined contact location; and
determine whether the detected double-tap occurred within an area of the touch-sensitive display (20) displaying the selected items, or outside of the area displaying the selected items.

5. The device (10) of any one of claims 1-4 wherein the processor (12) is further configured to visually indicate the selected items to the user.

6. The device (10) of any one of claims 1-5 wherein the processor (12) is further configured to:
determine (44) whether a user contact on the touch-sensitive display (20) is a single-tap or a double-tap; and
if no items are selected and the user contact is a double-tap, select (48) the first item in the collection of items.

7. The device (10) of any one of claims 1-6 wherein the collection of items comprises a plurality of items arranged in a list (30).

8. The device (10) of any one of claims 1-7 wherein the collection of items comprises a plurality of items arranged as a grid.

9. A method (40) of selecting items from a collection of items displayed on a touch-sensitive display (20) of a mobile communications device (10), the method comprising:
displaying (42) a collection of items on a touch-sensitive display (20) screen of a mobile communications device (10);
selecting (44) a first item in the collection responsive to detecting a single-tap of the first item on the touch-sensitive display (20) screen by a user; and
expanding (58) the selection by selecting a second item in the collection and any intervening items responsive to detecting a subsequent double-tap of the second item on the touch-sensitive display (20) screen by the user.

10. The method (40) of claim 9 further comprising:
unselecting (50) one of the selected items responsive to detecting a subsequent single-tap of the selected item; and
unselecting (54) all selected items responsive to detecting a subsequent double-tap of any of the selected items.

11. The method (40) of any one of claims 9-10 further comprising expanding (58) the selection by selecting a third item in the collection of items and any intervening items between the third item and one of the previously selected items responsive to detecting a subsequent double-tap of the third item on the touch-sensitive display (20) screen by the user.

12. The method (40) of any one of claims 9-11 further comprising:
determining (54) a contact location on a surface of the touch-sensitive display (20) for the double-tap relative to an area displaying the selected items by determining whether the double-tap occurred within an area of the touch-sensitive display (20) displaying the selected items, or outside of the area displaying the selected items; and
expanding (58) the selection, or clearing (56) the selection, based on the determined contact location.

13. The method (40) of any one of claims 9-12 further comprising visually indicating each selected item to the user.

14. The method (40) of any one of claims 9-13 further comprising:
determining (44) whether a user action on the touch-sensitive display (20) is a single-tap or a double-tap;
selecting (48) the first item in the collection of items if the user contact is a double-tap and there are no items already selected.

15. The method (40) of any one of claims 9-14 wherein the collection of items comprises a plurality of items arranged in one of a list (30) and a grid.
